# EUROPEAN PATENT SPECIFICATION

(11) **EP 0 856 819 B1**
(45) Date of publication and mention of the grant of the patent: **02.05.2002**
(21) Application number: 97200305.7
(22) Date of filing: 04.02.1997
(51) Int. Cl.: G07F 7/10

(54) **Communication system for carrying out pin related services on a chipcard, a chipcard suitable for such a communication system, and method for carrying out a pin related service on the chipcard**
Kommunikationssystem zum Ausführen von PIN-bezogenen Dienstleistungen mit einer Chipkarte; für ein solches Kommunikationssystem geeignete Chipkarte und Verfahren zum Durchführen von einer PIN-bezogenen Dienstleistung mit einer Chipkarte
Système de communication pour la mise en oeuvre de services relatifs à un numéro PIN, avec une carte à puce; une carte à puce apte à un tel système de communication et méthode de mise en oeuvre d'un service relatif à un numéro PIN, avec la carte à puce

(43) Date of publication of application: 05.08.1998
(73) Proprietor: Koninklijke KPN N.V., 9726 AE Groningen (NL)
(72) Inventor: Van Bruchem, Dirk Jan Jacobus, 2291 LG Wateringen (NL); Rombaut, Willem, 2552 HT Den Haag (NL)
(74) Representative: Kruk, Wiggert Johan

(56) References cited:
- EP-A- 0 203 542
- EP-A- 0 232 058
- EP-A- 0 363 122
- EP-A- 0 594 493
- WO-A-90/15382
- US-A- 5 012 076
- RANKL EFFING: 'Handbuch der Chipkarten', 1995, CARL HANSER VERLAG, MUNICH * page 160 - page 161 * * page 238 - page 239 *

## Description

### Background of the Invention

The present invention relates to a communication system provided with at least one server and at least one terminal, both the at least one server and the at least one terminal being arranged to communicate with each other, the at least one terminal being provided with input means arranged to allow a user to enter data, e.g. a PIN code, with communication means to communicate with a chipcard and with a processor connected both to the input means and to the communication means, the system being arranged to carry out at least one PIN related service and at least one non-PIN related service and the at least one server is arranged to control carrying out said at least one non-PIN related service via said at least one terminal.

Such communications systems are now used, e.g., for carrying out banking operations.

D1 (EP 0 363 122 A) describes a transaction authentication system comprising a terminal and an IC card which is detachably loaded into the terminal. The terminal supplies at least a transaction data which is related to a transaction and a designated storage region for storing the transaction data to the IC card when the IC card makes an access to a service via the terminal. The IC card writes the transaction data received from the terminal in a designated storage region of its memory and generates a verified data which is renewed every time the transaction data is written into the memory. The verified data has a value in conformance with a predetermined generating algorithm and is stored in the memory and also supplied to the terminal. The terminal generates a transaction historical information which includes at least the designated storage region, the transaction data and the verified data and stores the transaction historical information in the first memory, so that a transaction is authenticable from a correspondence of the verified data stored in the memory.

In the communication system according to the prior art the at least one server has full control over any of the actions carried out by the terminal on the chipcard to complete the service concerned. When the service to be carried out is PIN related, i.e. the user is requested to enter his PIN code (PIN = Personal Identification Number) before the service can be carried out, the server requests the terminal to have the entered PIN code checked by the chipcard. If the entered PIN code is correct, the data related to any PIN related service available on the chipcard are freely available to the server. Then it is possible for the server to access data files on the chipcard even those to which it may not be allowed to do so. Moreover, unauthorized servers may take over control of the authorized server and carry out PIN related services. Such situations need to be avoided.

### Summary of the Invention

Therefore, it is a primary object of the present invention to provide a communication system in which the problems mentioned above are overcome.

It is a further object of the present invention to provide a chipcard able to check software downloaded from the server to the terminal by using MAC's.

Moreover, it is an object of the present invention to provide a method of carrying out PIN related services without giving unauthorized servers the opportunity to control this.

In order to obtain the primary object the communication system according to the invention as defined above is characterized in that said at least one server is arranged to transfer control to said at least one terminal as soon as a PIN related service has to be carried out, and said terminal is arranged to control carrying out said PIN related service.

By transferring the control of PIN related services from the server to the terminal no unauthorized server can manipulate data flow from and towards the chipcard.

The communication system is able to carry out operations in a PIN validated mode, in which the control of the operations is carried out by the terminal, and a non-PIN validated mode, in which the control of the services concerned is carried out by the server.

Switching between these modes can be done under the control of the server which is, preferably, arranged to control non-PIN related services when the at least one terminal starts a communication with the chipcard, but to transfer control to the at least one terminal as soon as a PIN related service has to be carried out, the terminal being arranged to control carrying out the PIN related service.

Preferably, any communication between the authorized server and the terminal in the PIN validated mode is carried out by calculating and transmitting message authentication codes.

In order to provide a system in which the terminal is also able to take over the control of future PIN related services from the server, a system as defined above is claimed wherein the at least one server is arranged to download PIN related, service oriented software to the at least one terminal by calculating and transmitting service related message authentication codes, the at least one terminal being arranged to receive the service related message authentication codes, and to instruct the chipcard to verify the service related message authentication codes.

For the latter communication system the invention also claims a chipcard storing data related to at least one PIN related service and arranged to communicate with a terminal, the latter being arranged to communicate with at least one server characterized in that the data related to at least one PIN related service is provided with a key and an algorithm to calculate message authentication codes and the chipcard is arranged to receive instructions from the terminal to verify software downloaded by the at least one server to the terminal, which software is related to the at least one PIN related service and which downloaded software comprises also message authentication codes.

Moreover, the invention is related to a method of carrying out a service with a chipcard by using a communication system defined above, characterized by the following steps:
a. starting communicating between the at least one terminal and a chipcard and between the at least one terminal and the at least one server;
b. detecting whether the service on the chipcard is PIN related and, if so, transferring control of carrying out the PIN related service from the server to the at least one terminal.

Further methods in accordance with the present invention are defined in the method subclaims.

### Brief Description of the Drawings

The invention will now be explained with reference to the drawing which is intended to illustrate and not to limit the present invention.
Figure 1 shows a communication system known from the prior art;
figure 2 shows a card and a schematic block diagram of the terminal of the communication system according to figure 1;
figure 3 shows a flow diagram illustrating the principles of the present invention with respect to changing from a non-PIN validated mode to a PIN-validated mode;
figure 4 shows a flow diagram illustrating the principles of the present invention with respect to downloading application software from a server to a terminal.

### Detailed Description of the Embodiments

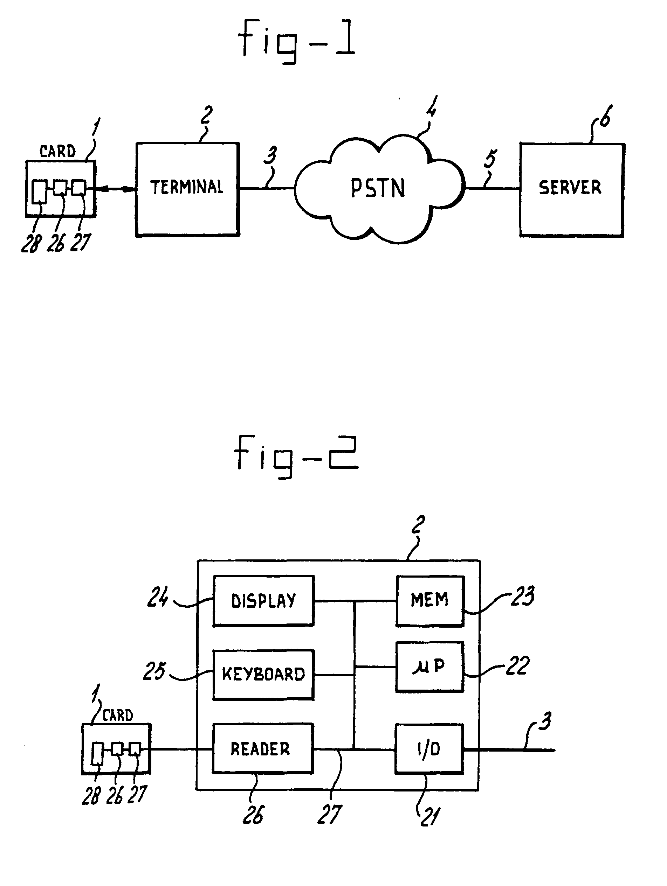

The present invention can best be explained with reference to figure 1 which shows, very schematically, a communication system used in the prior art. The communication system comprises at least one terminal 2 and at least one server 6. The server 6 may be any server known from the prior art and may be implemented by a personal computer provided with a processor, I/O means, memory and software. The terminal 2 is connected to the server 6 by means of a connection 3 and a public switch telephone network PSTN 4 and a connection 5 to the server 6. The connections 3, 5 may be physical connections, like wiring or optical fibres. However, they may also be any known wireless connection. The PSTN 4 may be substituted by any known communication network, like ISDN, X25, Internet.

The terminal 2 is able to communicate with a chipcard 1, as is indicated by a double headed arrow between card 1 and terminal 2. The chipcard is an "intelligent" card, i.e., it is provided with a processor 26, I/O means 27, and a memory 28, as known to persons skilled in the art.

Figure 2 schematically shows some functional blocks within the terminal 2 which are useful for a terminal in accordance with the present invention.

The terminal 2 is provided with an I/O unit 21 for connection to the connection 3.

The terminal 2 further comprises a reading unit 26 arranged for communicating with the chipcard 1.

Moreover, the terminal 2 is provided with input means, for instance a keyboard 25 allowing a user to input data. Also provided are a display 24 and a memory 23.

A microprocessor µP 22 is provided to carry out and to control processing tasks. The microprocessor 22 is connected to the I/O unit 21, the reading unit 26, the input means 25, the display 24, and the memory 23 by means of a data bus 27.

The terminal 2 may, for instance, be a modern telephone apparatus connected to the telephone network. However, the telephone apparatus 2 may, alternatively, be a wireless telephone apparatus. Such telephones need to be provided with a reading unit 26 for communicating with a chipcard. Such telephones are now available on the market.

The chipcard 1 referred to may be a card known as "Chipper"®.

The chipcard 1 may be provided with a multiple service capacity. One of these services may be an electronic purse. For payments with this electronic purse, no PIN code is used, nowadays. However, for transferring (electronic) money into such a purse, the user of the chipcard has to enter his PIN code.

Moreover, it is envisaged that some of these services may be related to classified data or may relate to large amounts of money. These services may only be used by persons knowing a predetermined PIN code related to the service concerned.

One such service is the service called "girofoon", which gives a user the possibility of transferring money from one of his own accounts to another one of his own accounts.

A new service is planned by the Dutch Postbank to allow a user to transfer money from one's own account to an account of a third party.

For the transfer of money from one account to another account, the server 6 requests a user through the terminal 2 to input his PIN code by means of the input means 25. The microprocessor 22 controls the transfer of the PIN code to the chipcard 1 and requests the chipcard 1 to validate the PIN code. The chip-card's processor 26 checks the PIN code received and sets a PIN flag after it has established that the correct PIN code was entered by the user. The PIN code is not transmitted to the server 6, since that would introduce the risk of tapping the PIN code from the connections 3, 5, by an unauthorized party.

However, as soon as the terminal 2 has identified by checking the value of the PIN flag that the user has entered the correct PIN code the related service is free to be carried out by the server 6. In other words, at that moment, the reading unit 26, the input means 25, the display 24, the microprocessor 22 and the memory 23 of the terminal 2, as shown in figure 2, can be considered to form remote elements of the server 6.

At that moment, the server 6 has full control over any PIN code related service of the chipcard 1, whereas it may, actually, only be authorized to control, say, one or two PIN related services.

Moreover, it is then principally possible for any unauthorized server to take over the communication between the terminal 2 and the server 6 in order to communicate with the terminal 2 itself. At that moment, the unauthorized server (not shown) will also be able to control PIN related services of the chipcard 1 since permission has been given to carry out those services.

In accordance with the present invention it is proposed to introduce two modes of operation: a PIN validated mode and a non-PIN validated mode. The PIN validated mode is the mode of operation in which PIN related services of the chipcard 1 can be carried out. The non-PIN validated mode is the mode in which the remaining services of a chipcard 1 can be carried out.

In the non-PIN validated mode, the terminal 2 operates as a usual remote terminal to the server 6. In other words, in the non-PIN validated mode the server 6 has complete control over any of the actions carried out by the terminal 2 on the chipcard 1. Only the "verify PIN" command is not allowed to be carried out by the server 6; the "verify PIN" command is always generated by the terminal 2 and sent to the chipcard 1 after the PIN has been entered by the user.

Preferably, when starting a communication between the chipcard 1 and the terminal 2, the non-PIN validated mode is the standard mode with which the system is working.

As soon as the server 6 establishes that a service of the chipcard 1 which a user wishes to be carried out is PIN related, the server 6 transfers overall control to the terminal 2. With modern telephone apparatuses this is possible since they are equipped with a microprocessor 22 and a memory 23 as shown in figure 2. From that moment onwards, the communication system operates in the PIN validated mode. In the PIN validated mode, the microprocessor 22 controls carrying out the service concerned by means of full control of the reader unit 26, the keyboard 25, the display 24, and the memory 23. Of course, in the PIN validated mode there are still some communications to be made between the terminal 2 and the server 6. However, these communications are related to "high level commands". Here, "high level commands" refer to commands that are received by microprocessor 22 of terminal 2 and are translated by the microprocessor 22 in predetermined instructions for the reader 26, the keyboard 25, the display 24, and the memory 23. The microprocessor 22 has full control over these instructions. The server 6 is not allowed to have direct access to these components in the terminal 2 or the chipcard 1 itself. In other words, "low level commands" sent by the server 6 to the terminal 2, which would give the server 6 direct access to the components in the terminal 2, are not accepted by the microprocessor 22. Thus, the server 6 can only carry out those PIN related services which it is authorize to carry out under the control of the terminal 2. The server 6 does not have access to PIN related services to which it is not authorized.

The use of a PIN validated mode is shown in figure 3 which shows a flow diagram of steps taken in the system.

In step 301 the system waits for the user of the chipcard 1 to enter his PIN.

As soon as the user has entered his PIN the terminal 2 transmits a "verify PIN" command to the chipcard 1. The chipcard 1 then checks the entered PIN and sends a corresponding message to the terminal 2. Then, the chipcard 1 may set a PIN flag if it has established that the correct PIN was entered. Also the terminal 2 will notice that the PIN validated mode is entered, e.g., by setting a PIN flag.

In step 303 the terminal 2 establishes whether the entered PIN was correct or not. If the PIN was incorrect the system steps to step 304 in which a message is shown to the user indicating that an incorrect PIN was entered.

Step 304 may be followed by a step 305 which allows the user, for instance, at maximum two additional attempts for entering a correct PIN code.

If the terminal 2 establishes that the correct PIN was entered (step 303), it takes over full control of any activity to be carried out on the chipcard 1, step 306.

In step 307, the terminal 2 controls carrying out the PIN related service.

After terminating the PIN related service, the chipcard 1 will be automatically reset by the terminal 2. A message corresponding to this reset state is transmitted to the terminal 2. The terminal 2, then, transfers control to the server 6, step 309. After step 309, the system returns to step 301.

Transferring the control of PIN related services from the server 6 to the terminal 2 presupposes that the microprocessor 22 and the memory 23 of the terminal 2 are provided with suitable software to carry out the PIN related service concerned. However, at this moment only the PIN related service of "girofoon", mentioned above, has been fully developed. Therefore, terminals 2 now available on the market, can only be provided with suitable software related to the "girofoon" service.

New PIN related services will certainly become available in the near future. However, a problem will then arise, since the software necessary to carry out local control of these new PIN related services in the terminal 2 has not been developed. Selling new software related to these new PIN related services, e.g. on a floppy disk, may be a problem since modern telephone apparatuses are not provided with a floppy disk reader. Therefore, it is proposed to solve this problem by downloading software related to new PIN related services from the server 6 to the terminal 2.

However, downloading software from a server 6 to the terminal 2 introduces the risk of software being downloaded by an unauthorized server through connections 3, 5, to the terminal 2. The latter problem can be solved by only allowing downloading of software data to the terminal by using the concept of message authentication codes (MAC's). However, to do so, the terminal 2 must be able to verify MAC's. In order to verify MAC's, the terminal 2 must be provided with predetermined algorithms and keys. However, neither these algorithms nor these keys are stored on the terminals 2 which are now sold to the public.

To solve the latter problem, it is proposed to store the algorithms and keys necessary to calculate the MAC's on the chipcard 1. Each service, thus, has its own set of service data coupled to a predetermined algorithm and key on the chipcard 1.

Since the chipcard 1 is itself provided with a microprocessor (not shown) the chipcard 1 is able to calculate and verify the MAC concerned. The terminal 2 only has to instruct the chipcard 1 to do so during a download session.

After completing any PIN related service the chipcard 1 is automatically reset by the terminal 2. Then, the terminal 2 transfers overall control to the server 6, which means that it accepts low level commands transmitted by the server 6 again. Only as soon as a new PIN related service with the chipcard 1 has to be carried out, control of the service concerned is transferred to the terminal 2.

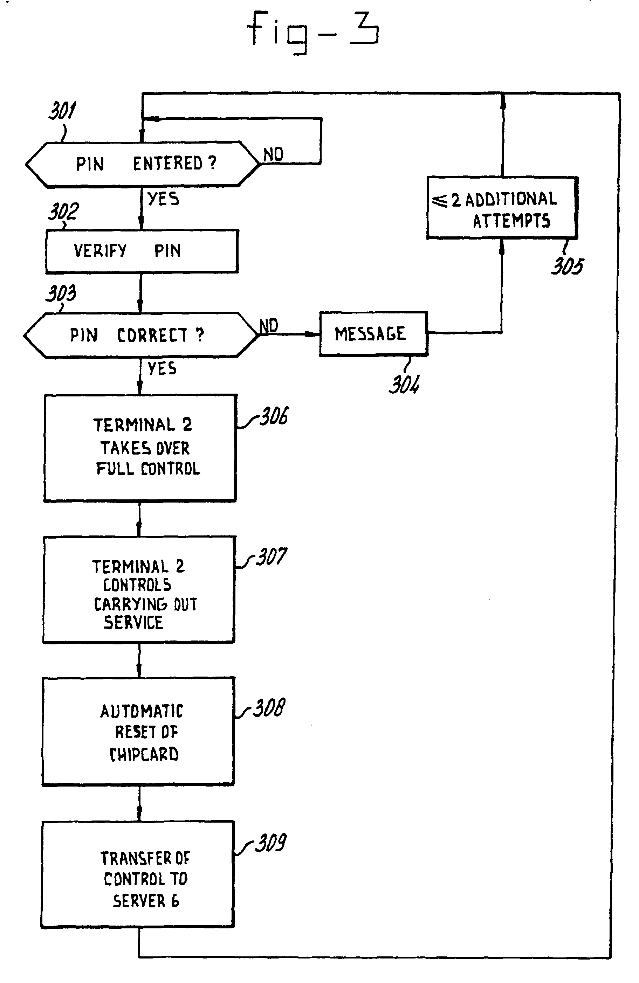

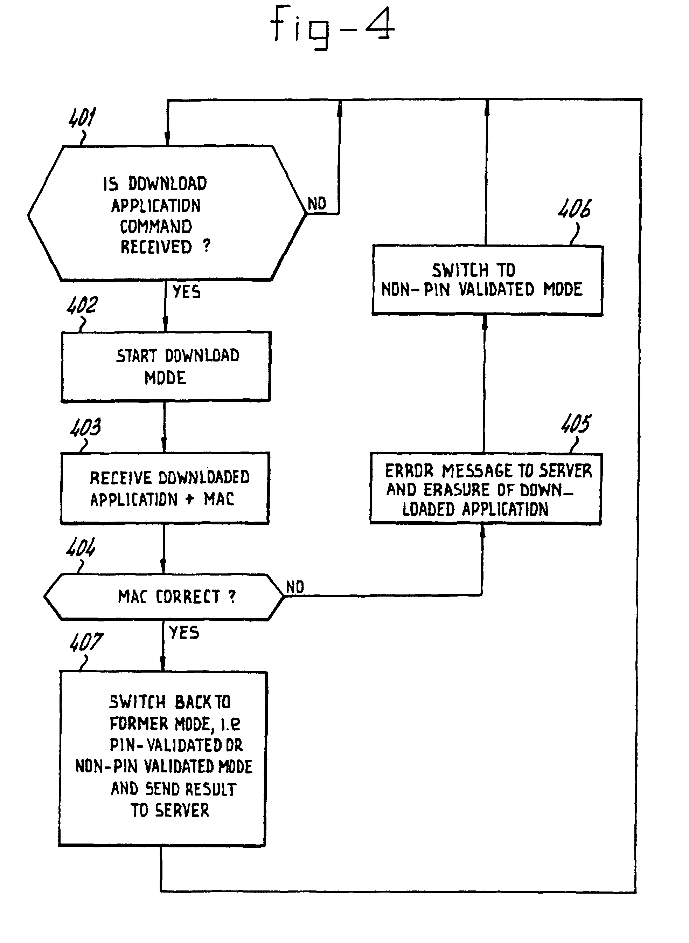

Figure 4 schematically shows a flow diagram for an embodiment of the method according to the invention for downloading application software from the server 6 to the terminal 2.

In step 401 the terminal 2 waits until a download application command has been received. If so, a download mode is started, step 402, and the server 6 starts downloading software related to the new application to the terminal 2. In step 403 the terminal 2 receives the downloaded application software and the MAC calculated by the server 6.

After step 403 has been completed, the MAC has to be checked. As indicated above, this check will be made by the microprocessor of the chipcard 1 upon request of the terminal 2. This check is carried out in step 404.

If it turns out that the MAC is incorrect, in step 405 the terminal 2 erases the downloaded application software and may send an error message to the server 6. Then, the terminal 2 switches to the non-PIN validated mode, step 406.

If the check of the MAC gives the result that the MAC is correct, the terminal 2 switches back to the former mode, which may either be a PIN-validated mode or a non-PIN validated mode and sends the result to the server 6, step 407.

It is observed that the terminal 2 may either be in the non-PIN validated mode, or in the PIN validated mode, when starting the routine shown in figure 4.

Preferably, as soon as the PIN validated mode is entered any communication between the terminal 2 and the server 6 can only be carried out by transmitting data and commands obtained by MAC operations. This further reduces the risk of manipulating data and commands.

It is to be understood that the description of the present invention given above is only meant to illustrate the present invention and not to limit its scope. The scope of the present invention is only limited by the annexed claims.

## Claims

1. Communication system provided with at least one server (6) and at least one terminal (2), both said at least one server and said at least one terminal being arranged to communicate with each other, said at least one terminal being provided with input means (25) arranged to allow a user to enter data, e.g. a PIN code, with communication means (26) to communicate with a chipcard (1) and with a processor (22) connected both to said input means (25) and to said communication means (26), the system being arranged to carry out at least one PIN related service and at least one non-PIN related service and the at least one server (6) is arranged to control carrying out said at least one non-PIN related service via said at least one terminal (2),
**characterized in that**
said at least one server (6) is arranged to transfer control to said at least one terminal (2) as soon as a PIN related service has to be carried out, and said terminal (2) is arranged to control carrying out said PIN related service.

2. System according to claim 1 wherein, in use, after said at least one terminal (2) has taken over control of carrying out a PIN related service any communication between said at least one server (6) and said at least one terminal (2) is carried out by calculating message authentication codes.

3. System according to claim 1 or 2 wherein, in use, after said PIN related service has been completed said at least one terminal (2) automatically resets the chipcard (1) and then transfers control of carrying out services to said at least one server (6).

4. System according to any of the preceding claims wherein said at least one server (6) is arranged to download PIN related, service oriented software to said at least one terminal (2) by calculating and transmitting service related message authentication codes, said at least one terminal (2) being arranged to receive said service related message authentication codes, and to instruct chipcard (1) to verify said service related message authentication codes.

5. Chipcard (1) storing data related to at least one PIN related service and arranged to communicate with a terminal (2), the latter being arranged to communicate with at least one server (6) **characterized in that** said data related to at least one PIN related service is provided with a key and an algorithm to calculate message authentication codes and said chipcard (1) is arranged to receive instructions from said terminal (2) to verify software downloaded by said at least one server (6) to said terminal (2), which software is related to said at least one PIN related service and which downloaded software comprises also message authentication codes.

6. Method of carrying out a service with a chipcard (1) by using a system according to any of the claims 1 through 4 **characterized by** the following steps:
a. starting communicating between said at least one terminal (2) and a chipcard (1) and between said at least one terminal (2) and said at least one server (6);
b. detecting whether said service on said chipcard (1) is PIN related and, if so, transferring control of carrying out said PIN related service from said server (6) to said at least one terminal (2).

7. Method according to claim 6 also including the steps of:
- carrying out at least one non-PIN related service and
- controlling carrying out said at least one non-PIN related service by said at least one server (6) via said at least one terminal (2).

8. Method according to claim 7 including the steps of:
- controlling any non-PIN related service by said at least one server (6) when said at least one terminal (2) starts a communication with said chipcard but
- transferring control from said at least one server (6) to said at least one terminal (2) as soon as a PIN related service has to be carried out.

9. Method according to claim 8 including the step of:
- communicating between said at least one server (6) and said at least one terminal (2) by calculating message authentication codes after said at least one terminal (2) has taken over control of carrying out a PIN related service.

10. Method according to any of the claims 6 to 9 including the step of:
- automatically resetting said chipcard (1) and transferring control of carrying out services to said at least one server (6) after said PIN related service has been completed.

11. Method according to any of the claims 6 through 10 including the steps of:
- downloading PIN related, service oriented software from said at least one server (6) to said at least one terminal (2) by calculating and transmitting service related message authentication codes;
- receiving said service related message authentication codes by said at least one terminal (2), and
- instructing said chipcard (1) to verify said service related message authentication codes by using a key and an algorithm stored on said chipcard (1).

## Patentansprüche

1. Kommunikationssystem mit mindestens einem Server (6) und mit mindestens einem Endgerät (2), wobei sowohl der besagte mindestens eine Server und das besagte mindestens eine Endgerät so angeordnet sind, um miteinander kommunizieren zu können, wobei das besagte mindestens eine Endgerät mit Eingabemitteln (25) versehen ist, um es einem Benutzer zu gestatten, Daten einzugeben, z.B. ein PIN Code, mit Kommunikationsmitteln (26), um mit einer Chipkarte (1) zu kommunizieren, und mit einem Prozessor (22), der sowohl mit dem besagten Eingabemittel (25) als auch mit dem Kommunikationsmittel (26) verbunden ist, wobei das System so ausgebildet ist, um mindestens einen mit einem PIN-Code zu beziehenden Dienst auszuführen und mindestens einen nicht mit einem PIN-Code zu beziehenden Dienst auszuführen, und wobei der mindestens eine Server (6) ausgebildet ist, um das Ausführen von dem besagten mindestens einen nicht mit dem PIN-Code zu beziehenden Dienst über das besagte mindestens eine Endgerät (2) zu steuern, **dadurch gekennzeichnet, dass** der besagte mindestens eine Server (6) so ausgestaltet ist, um die Kontrolle an das besagte mindestens eine Endgerät (2) zu übergeben, sobald ein PIN-Code bezogener Dienst auszuführen ist, und dass das besagte Endgerät (2) so ausgestaltet ist, um das Ausführen des besagten PIN-bezogenen Dienstes zu steuern.

2. System nach Anspruch 1, **dadurch gekennzeichnet, dass**, nachdem das mindestens eine Endgerät (2) die Steuerung der Ausführung von einem PIN-Code bezogenen Dienst übernommen hat, jegliche Kommunikation zwischen dem besagten mindestens einen Server (6) und dem besagten mindestens einen Endgerät (2) durch Berechnen von Nachrichten-Authentifizierungscodes ausgeführt wird.

3. System nach Anspruch 1 oder Anspruch 2, **dadurch gekennzeichnet, dass**, nachdem der besagte PIN-Code bezogene Dienst abgeschlossen ist, das besagte mindestens eine Endgerät (2) automatisch die Chipkarte (1) zurücksetzt und dann die Steuerung der Ausführung von Diensten an den besagten mindestens einen Server (6) überträgt.

4. System nach einem der vorstehenden Ansprüche, **dadurch gekennzeichnet, dass** der mindestens eine Server (6) ausgestaltet ist, um PIN-bezogene dienstorientierte Software an das mindestens eine Endgerät (2) durch Berechnen und Übertragen von dienstbezogenen Nachricht-Authentifizierungscodes herunterzuladen, wobei das mindestens eine Endgerät (2) ausgestaltet ist, um dienstbezogene Nachricht-Authentifizierungscodes zu empfangen, und um die Chipkarte (1) zu instruieren, um die dienstbezogenen Nachrichten-Authentifizierungscodes zu verifizieren.

5. Chipkarte (1), die Daten speichert, die auf mindestens einen PIN-bezogenen Dienst bezogen sind, und so ausgestaltet ist, um mit einem Endgerät (2) zu kommunizieren, wobei Letzteres so ausgestaltet ist, um mit mindestens einem Server (6) zu kommunizieren, **dadurch gekennzeichnet, dass** die Daten, die sich auf den mindestens einen PIN-bezogenen Dienst beziehen, mit einem Schlüssel und einem Algorithmus versehen sind, um Nachrichten-Authentifizierungscodes zu berechnen, und dass die Chipkarte (1) so ausgestaltet ist, um Instruktionen von dem besagten Endgerät (2) zu empfangen, um die Software zu verifizieren, die von dem mindestens einen Server (6) an das besagte Endgerät heruntergeladen wird, welche Software auf den mindestens einen PIN-bezogenen Dienst bezogen ist, und welche heruntergeladene Software auch Nachrichten-Authentifizierungscodes umfasst.

6. Verfahren zum Ausführen eines Dienstes mit einer Chipkarte (1) durch Einsatz eines Kommunikationssystems nach einem der Ansprüche 1 bis 4, **gekennzeichnet durch** die folgenden Schritte:
a.) Beginnen der Kommunikation zwischen dem mindestens einen Endgerät (2) und einer Chipkarte (1) und zwischen dem mindestens einen Endgerät (2) und dem mindestens einen Server(6),
b.) Erfassen, ob der auf der Chipkarte (1) bestehende Dienst PIN-bezogen ist, und falls ja, Übertragen der Steuerung des Ausführens des PIN-bezogenen Dienstes von dem besagten Server (6) auf das besagte mindestens eine Endgerät (2).

7. Verfahren nach Anspruch 6, **dadurch gekennzeichnet, dass** es auch die Schritte umfasst:
- Ausführen von mindestens einem nicht-PIN-bezogenen Dienst, und
- Steuern des Ausführens des besagten mindestens einen nicht-PIN-bezogenen Dienstes durch den mindestens einen Server (6) über das mindestens eine Endgerät (2).

8. Verfahren nach Anspruch 7, **dadurch gekennzeichnet, dass** es auch die Schritte umfasst:
- Steuern eines jeden nicht-PIN-Code-bezogenen Dienstes durch den mindestens einen Server (6), wenn das besagte mindestens eine Endgerät (2) eine Kombination mit der besagten Chipkarte beginnt, aber
- Übertragen der Steuerung von dem besagten mindestens einen Server (6) an das besagte mindestens eine Endgerät (2) sobald ein PIN-bezogener Dienst auszuführen ist.

9. Verfahren nach Anspruch 8, welches den Schritt umfasst:
- Kommunizieren zwischen dem besagten mindestens einen Server (6) und dem besagten mindestens einen Endgerät (2) durch Berechnen von Nachrichten-Authentifizierungscodes, nachdem das besagte mindestens eine Endgerät (2) die Steuerung der Ausführung des PIN-bezogenen Dienstes übernommen hat.

10. Verfahren nach einem der Ansprüche 6 bis 9, welches den Schritt umfasst:
- automatisches Zurücksetzen der besagten Chipkarte (1) und Übertragen der Steuerung des Ausführens der Dienste an den besagten mindestens einen Server (6), nachdem der besagte PIN-bezogene Dienst abgeschlossen worden ist.

11. Verfahren nach einem der Ansprüche 6 bis 10, **dadurch gekennzeichnet, dass** es die Schritte umfasst:
- Herunterladen von PIN-bezogener dienstorientierter Software von dem besagten mindestens einen Server (6) an das besagte mindestens eine Endgerät (2) durch Berechnen und Übertragen von dienstbezogenen Nachrichten-Authentifizierungscodes,
- Empfangen der besagten dienstbezogenen Nachrichten-Authentifizierungscodes durch das mindestens eine Endgerät (2), und
- Instruieren der besagten Chipkarte (1), um die dienstbezogenen Nachrichten-Authentifizierungscodes zu verifizieren durch Einsatz eines Schlüssels und eines auf der besagten Chipkarte (1) gespeicherten Algorithmus.

## Revendications

1. Système de communication doté d'au moins un serveur (6) et d'au moins un terminal (2), ledit au moins un serveur et ledit au moins un terminal étant tous deux destinés à communiquer l'un avec l'autre, ledit au moins un terminal étant doté d'un moyen d'entrée (25) conçu pour permettre à un utilisateur d'entrer des données, par exemple un code PIN, d'un moyen de communication (26) permettant de communiquer avec une carte à puce (1) et d'un processeur (2) connecté à la fois audit moyen d'entrée (25) et audit moyen de communication (26), le système étant conçu pour mettre en oeuvre au moins un service associé au PIN et au moins un service non associé au PIN, et ledit au moins un serveur (6) étant conçu pour commander la mise en oeuvre dudit au moins un service non associé au PIN via ledit au moins un terminal (2),
**caractérisé en ce que** ledit au moins un serveur (6) est conçu pour transférer la commande audit au moins un terminal (2) dès qu'un service associé au PIN doit être effectué, et ledit terminal (2) est conçu pour commander la mise en oeuvre dudit service associé au PIN.

2. Système selon la revendication 1, où, en utilisation, après que ledit au moins un terminal (2) s'est vu transmettre la commande de la mise en oeuvre d'un service associé au PIN, toute communication entre ledit au moins un serveur (6) et ledit au moins un terminal (2) est effectué par calcul de codes d'authentification de message.

3. Système selon la revendication 1 ou 2, où, en utilisation, après que ledit service associé au PIN a été complètement effectué, ledit au moins un terminal (2) repositionne automatiquement la carte à puce (1), puis transfère la commande de mise en oeuvre des services audit au moins un serveur (6).

4. Système selon l'une quelconque des revendications précédentes, où ledit au moins un serveur (6) est conçu pour télécharger un logiciel orienté service associé au PIN à destination dudit au moins un terminal (2) en calculant et en transmettant des codes d'authentification de message associés au service, ledit au moins un terminal (2) étant conçu pour recevoir lesdits codes d'authentification de message associés au service et pour donner instruction à la carte à puce (1) de vérifier lesdits codes d'authentification de message associés au service.

5. Carte à puce (1) stockant des données associées à au moins un service associé à un PIN et conçue pour communiquer avec un terminal (2), ce dernier étant conçu pour communiquer avec au moins un serveur (6),
**caractérisée en ce que** lesdites données associées à au moins un service associé au PIN sont dotées d'une clé et d'un algorithme permettant de calculer des codes d'authentification de message et ladite carte à puce (1) est conçue pour recevoir des instructions de la part dudit terminal (2) afin de vérifier le logiciel téléchargé par ledit au moins un serveur (6) à destination dudit terminal (2), lequel logiciel est associé audit au moins un service associé au PIN et lequel logiciel téléchargé comprend également des codes d'authentification.

6. Procédé de mise en oeuvre d'un service au moyen d'une carte à puce (1) par utilisation d'un système tel que défini dans l'une quelconque des revendications 1 à 4,
**caractérisé en ce qu'**il comprend les opérations suivantes :
a. faire démarrer la communication entre ledit au moins un terminal (2) et une carte à puce (1) et entre ledit au moins un terminal (2) et ledit au moins un serveur (6) ;
b. déterminer si ledit service présent sur ladite carte à puce (1) est associé à un PIN et, si c'est le cas, transférer la commande de la mise en oeuvre dudit service associé au PIN dudit serveur (6) audit au moins un terminal (2).

7. Procédé selon la revendication 6, comportant aussi les opérations suivantes :
- effectuer au moins un service non associé au PIN, et
- commander la mise en oeuvre dudit au moins un service non associé au PIN par ledit au moins un serveur (6) via ledit au moins un terminal (2).

8. Procédé selon la revendication 7, comportant les opérations suivantes :
- commander tout service non associé au PIN par ledit au moins un serveur (6) lorsque ledit au moins un terminal (2) fait démarrer une communication avec ladite carte à puce, mais
- transférer la commande dudit au moins un serveur (6) audit au moins un terminal (2) aussitôt qu'un service associé au PIN doit être effectué.

9. Procédé selon la revendication 8, comportant les opérations suivantes :
- communiquer entre ledit au moins un serveur (6) et ledit au moins un terminal (2) en calculant des codes d'authentification de message après que ledit au moins un terminal (2) a pris la commande pour la mise en oeuvre d'un service associé au PIN.

10. Procédé selon l'une quelconque des revendications 6 à 9, comportant l'opération suivante :
- repositionner automatiquement ladite carte à puce (1) et transférer la commande de la mise en oeuvre de services audit au moins un serveur (6) après que ledit service associé au PIN a été achevé.

11. Procédé selon l'une quelconque des revendications 6 à 10, comportant les opérations suivantes :
- télécharger un logiciel orienté service associé au PIN, de la part dudit au moins un serveur (6) à destination dudit au moins un terminal (2), en calculant et en transmettant des codes d'authentification de message associés au service ;
- faire recevoir lesdits codes d'authentification de message associés au service par ledit au moins un terminal (2), et
- donner instruction à ladite carte à puce (1) de vérifier lesdits codes d'authentification de message associés au service en utilisant une clé et un algorithme qui sont stockés dans ladite carte à puce (1).
